# EUROPÄISCHE PATENTANMELDUNG

(11) **EP 4 414 248 A1**
(43) Veröffentlichungstag der Anmeldung: **14.08.2024**
(21) Anmeldenummer: 23218947.2
(22) Anmeldetag: 21.12.2023
(51) Int. Cl.: B62D 25/14, B62D 29/00

(54) **VORDERER BEREICH EINER FAHRGASTZELLE**

(71) Anmelder: GF Casting Solutions AG, 8201 Schaffhausen (CH)
(72) Erfinder: PHILIPP, Stephan, 78262 Gailingen (DE); Gunia, Marc, 8200 Schaffhausen (CH); Stark, Benedikt, 79780 Stühlingen (DE); Tschepe, Steven, 78267 Aach (DE)
(74) Vertreter: Fenner, Seraina

(57) **Zusammenfassung**

Vorderer Bereich einer Fahrgastzelle eines Kraftfahrzeugs, beinhaltend zwei sich genüberliegende A-Säulen, eine in Längsrichtung des Kraftfahrzeugs begrenzende Spritzwand (3) und eine Quertraverse (1), wobei sich die Quertraverse (1) quer zur Längsrichtung des Kraftfahrzeugs von der einen A-Säule zur gegenüberliegenden A-Säule erstreckt wobei die Quertraverse (1) ausschliesslich an den A-Säulen abgestützt bzw. gelagert ist, wobei die Quertraverse (1) als Druckgussbauteil ausgebildet ist.

## Beschreibung

Die Erfindung betrifft einen vorderen Bereich einer Fahrgastzelle eines Kraftfahrzeugs, beinhaltend zwei sich genüberliegende A-Säulen, eine in Längsrichtung des Kraftfahrzeugs begrenzende Spritzwand und eine Quertraverse, wobei sich die Quertraverse quer zur Längsrichtung des Kraftfahrzeugs von der einen A-Säule zur gegenüberliegenden A-Säule erstreckt.

In heutigen Kraftfahrzeugen wird in der Regel zur Befestigung von diversen Cockpitfunktionen als tragendes Bauteil ein Querträger vorgesehen, der sich im Wesentlichen ausschliesslich horizontal von einer A-Säule zur gegenüberliegenden A-Säule erstreckt und in der Mitte über eine zusätzliche Stütze am Fahrzeugboden abgestützt wird. Am Querträger werden weitere separat ausgebildete Bauteile befestigt, die unterschiedliche Funktionen aufweisen, wie z. B. eine Pedalaufnahme, eine Abstützung zur Spritzwand oder eine Befestigung für eine bildgebende Einheit eines Head-Up-Displays wie auch andere Bauteile. Zur Optimierung der Stabilität des Querträgers, welcher sich über die gesamte Kraftfahrzeugbreite erstreckt, und an dem weitere Bauteile befestigt werden, weist der Querträger zwischen Fahrer und Beifahrer eine Tunnelstrebe zur zusätzlichen Abstützung auf, was den Fussraum zudem in einen Fahrer- und Beifahrerbereich unterteilt.

Die DE 10 2013 212 878 A1 offenbart ein Cockpitstrukturteil, das einen Cockpit-Querträger beinhaltet, der einen Stützfuss aufweist, der nach unten hin auf den Fahrzeugboden abgestützt ist. Dadurch wird der Fussraum des Fahrers und Beifahrers durch eine Mittelkonsole oder einen Mitteltunnel, die den Stützfuss umgibt, in zwei Bereiche unterteilt.

Die DE 10 2017 004 695 A1 offenbart einen Fahrgastraum, bei dem neben eines Mitteltunnels noch eine weitere Abstützung der Instrumententafel, mittels einer zusätzlichen Ablagekonsole im Beifahrerbereich, erfolgt.

Es ist Aufgabe der Erfindung einen vorderen Bereich einer Fahrgastzelle vorzuschlagen, der dem heutigen Trend der Fahrgastzelle Rechnung trägt und die Bedienelemente im Cockpit reduziert und das Raumgefühl durch ein grösseres und offeneres Platzangebot verbessert.

Diese Aufgabe wird erfindungsgemäss dadurch gelöst, dass die Quertraverse ausschliesslich an den A-Säulen abgestützt bzw. gelagert ist, wobei die Quertraverse als Druckgussbauteil ausgebildet ist.

Der erfindungsgemässe vordere Bereich einer Fahrgastzelle eines Kraftfahrzeugs, beinhaltend zwei sich genüberliegende A-Säulen, eine in Längsrichtung des Kraftfahrzeugs begrenzende Spritzwand und eine Quertraverse. Die Quertraverse erstreckt sich quer zur Längsrichtung des Kraftfahrzeugs durchgehend von der einen A-Säule zur gegenüberliegenden A-Säule. Die Längsrichtung des Fahrzeugs erstreckt sich in X-Richtung, quer bzw. rechtwinklig horizontal zur Fahrzeuglängsrichtung erstreckt sich die Y-Richtung und senkreckt zur Fahrzeuglängsrichtung oder auch zur Y-Richtung erstreckt sich die Z-Richtung, also nach unten oder oben. Die Quertraverse ist ausschliesslich an den A-Säulen abgestützt bzw. gelagert und weist keine weiteren Abstützungen auf den Fahrzeugboden auf. Dies ermöglicht einen durchgehend offenen Fussraum vom Fahrer bis zum Beifahrerbereich. Es bedarf somit keinem Mitteltunnel oder keiner Mittelkonsole zwischen dem Fahrer und dem Beifahrer. Die Quertraverse ist als Druckgussbauteil ausgebildet. Aus dem Stand der Technik gibt es Quertraversen die ebenfalls ohne weitere Abstützung auf den Fahrzeugboden über die Länge der Quertraverse ausgebildet sind wie in der EP 1 388 487 A2, jedoch sind dies Metallrohr, die eine hohe Steifigkeit aufweisen und eine solch grosse Distanz von der einen A-Säule bis zur anderen A-Säule ohne Durchbiegung und mit genügender Stabilität überbrücken.

Es ist vorteilhaft, wenn im vorderen Bereich einer Fahrgastzelle ein durchgehend offener Fussraum quer zur Längsrichtung des Kraftfahrzeugs von der einen A-Säule bis zur gegenüberliegende A-Säule und in Längsrichtung des Fahrzeugs bis zur Spritzwand gebildet ist. Durch das Fehlen einer Abstützung auf den Fahrzeugboden wird der Fussraum nicht mehr durch eine Mittelkonsole, welche meist eine Abstützung auf den Fahrzeugboden umgibt, getrennt, was ein verbessertes Platzangebot darstellt.

Vorzugsweise weist die Quertraverse an den beiden Enden Endabschnitte auf, wobei die Quertraverse ausschliesslich an den beiden Endabschnitten abgestützt bzw. gelagert ist. Die Endabschnitte werden an den A-Säulen mittels den Endabschnittsanbindungen befestigt. Vorzugsweise erfolgt dies durch einen Fügevorgang.

Vorzugseise ist an der Quertraverse eine Abstützung integral angeordnet und erstreckt sich zum Fahrzeugfrontraum hin in Bogenform. Die Abstützung erstreckt sich horizontal bzw. in X-Y Richtung, wodurch der offene Fussraum gewährleistet wird. Es ist vorteilhaft, wenn die Abstützung bzw. die beiden Enden der Abstützung jeweils an die beiden Endabschnitte der Quertraverse integral anschliessen und einen ausladenden Bogen in Richtung Fahrzeugfrontraum bilden, wodurch die Quertraverse und die Abstützung zusammen als ein Teil ausgebildet ist. Die integrale Anordnung der Abstützung an der Quertraverse erhöht die Steifigkeit und ist unteranderem mit ein Grund, weshalb die Quertraverse keine Abstützung zum Fahrzeugboden hin benötigt, und ein offener Fussraum gebildet werden kann.

Als vorteilhaft hat sich gezeigt, wenn im Scheitelpunkt der bogenförmigen Abstützung ein Anbindungspunkt angeordnet ist, um die Abstützung an der Karosserie bzw. an der Spritzwand abzustützen bzw. zu lagern. Dieser Anbindungspunkt erhöht die Steifigkeit was den Crashanforderungen zugutekommt.

Vorzugsweise ist zwischen der Quertraverse und der Abstützung eine Platte angeordnet, wobei die Quertraverse, die Abstützung und die Platte integral bzw. einteilig ausgebildet ist. Es ist vorteilhaft, wenn an die Quertraverse neben der Abstützung auch eine Platte integral anschliesst. Dies erhöht die Steifigkeit zusätzlich und dient ebenso dazu, dass die Quertraverse keine Abstützung zum Fahrzeugboden hin benötigt, und ein offener Fussraum gebildet werden kann.

Es hat sich als vorteilhaft gezeigt, wenn die Quertraverse zumindest abschnittsweise U-förmig ausgebildet ist bzw. einen U-förmigen Querschnitt aufweist. Die U-förmige Ausbildung dient einerseits dem Erreichen einer erhöhten Steifigkeit und andererseits auch einer guten Führungsmöglichkeit des Lüftungskanals und/oder der Kabel.

Vorzugsweise ist die U-Form der Quertraverse gegen unten, in negativer Z-Richtung, offen, wodurch die Kabel und/oder der Lüftungskanal an der Unterseite geführt wird.

Es ist vorteilhaft, wenn die Abstützung U-förmig ausgebildet ist. Die Abstützung weist vorzugsweise einen U-förmigen Querschnitt auf. Die U-Form ist vorzugsweise nach unten bzw. in negative Z-Richtung geöffnet. Vorzugsweise wird die U-Form zur Führung eines Luftkanals genutzt und kann mit einer HVAC-Einheit verbunden werden und/oder zur Kabelführung.

Es hat sich als vorteilhaft gezeigt, wenn ein Schenkel der U-förmigen Quertraverse integral an die Platte anschliesst und die Platte wiederum integral an einen Schenkel des U-förmigen Querschnitts der Abstützung anschliesst.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
Fig. 1 eine dreidimensionale Ansicht einer erfindungsgemässen Quertraverse,
Fig. 2 eine dreidimensionale Ansicht einer schematischen Fahrzeugkarosserie mit eingebauter Quertraverse mit Sicht auf den Fahrzeugfrontraum und
Fig. 3 eine dreidimensionale Ansicht aus Sicht der Fahrgastzelle in Richtung Fahrzeugfrontraum.

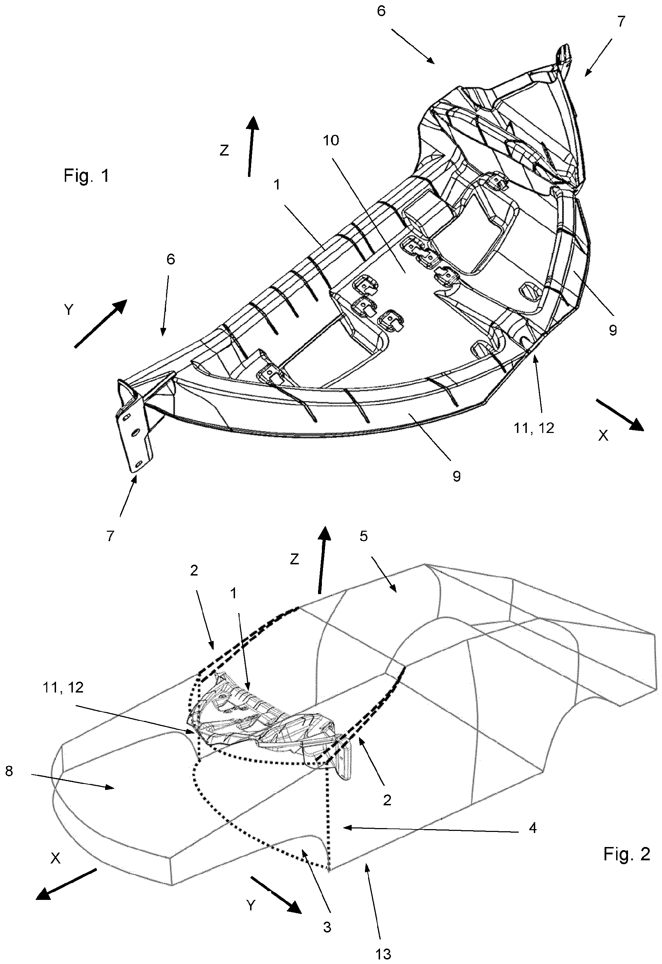

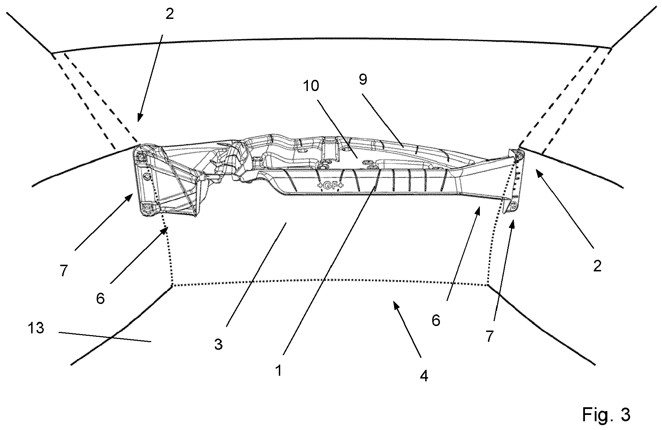

Die in Fig. 2 dargestellte Zeichnung zeigt eine Fahrzeugkarosserie 5 mit einem vorderen Bereich einer Fahrgastzelle eines Kraftfahrzeugs, die zwei sich gegenüberliegende A-Säulen 2, eine Spritzwand 3 und eine Quertraverse 1 beinhaltet, wobei sich die Quertraverse 1 quer Y zur Längsrichtung X des Kraftfahrzeugs von einer A-Säule 2 zur gegenüberliegenden A-Säule 2 erstreckt. Die Quertraverse 1 ist ausschliesslich an den A-Säulen 2 abgestützt bzw. gelagert, was gut aus Fig. 3 zu erkennen ist. Gut ersichtlich aus den Figuren 1 und 2 ist, dass die Quertraverse als Druckgussbauteil ausgebildet ist. Die erfindungsgemässe Quertraverse 1 weist keine Abstützungen in Z-Richtung bzw. in negativer Z-Richtung auf den Fahrzeugboden 13 auf. auf bzw. keine Abstützungen, die sich am Fahrzeugboden 13 abstützen. Fig. 3 zeigt den offenen Fussraum 4 der sich durchgehend in Y-Richtung von einer A-Säule 2 zur gegenüberliegenden A-Säule 2 und in X-Richtung bis zur Spritzwand 3 erstreckt. Die Quertraverse 1 weist an den beiden Enden Endabschnittanbindungen 7 aufweisende Endabschnitte 6 auf, mit denen sie an den A-Säulen 2 befestigt ist. Vorzugsweise ist an der Quertraverse 1 eine integrale Abstützung 9 angeordnet. Die Abstützung 9 erstreckt sich vorzugsweise von einem Endabschnitt 6 zum anderen Endabschnitt 6 der Quertraverse 1 und weist einen in Richtung Fahrzeugfrontraum bzw. in X-Richtung ausladende Bogenform auf. Die Quertraverse 1 und die Abstützung 9 sind zusammen als ein Teil bzw. einteilig ausgebildet. Es ist vorteilhaft, wenn im Scheitelpunkt 11 der bogenförmigen Abstützung 9 ein Anbindungspunkt 12 angeordnet ist, über den die Abstützung 9 an der Karosserie bzw. der Spritzwand 3 fixiert wird. Als bevorzugte Ausführungsform hat sich gezeigt, wenn zwischen der Quertraverse 1 und der Abstützung 9 eine Platte 10 integral angeordnet ist, so dass die Quertraverse 1, die Abstützung 9 und die Platte 10 zusammen als ein Teil ausgebildet sind. Zudem ist es vorteilhaft, dass die Quertraverse 1 wie auch die Abstützung 9 einen U-förmigen Querschnitt bzw. als U-Profil ausgebildet sind und jeweils ein Schenkel des U-Profils integral an die Platte 10 anschliesst.

### Bezugszeichenliste

- 1: Quertraverse
- 2: A-Säule
- 3: Spritzwand
- 4: Fussraum
- 5: Fahrzeugkarosserie
- 6: Endabschnitt
- 7: Endabschnittsanbindung
- 8: Fahrzeugfrontraum
- 9: Abstützung
- 10: Platte
- 11: Scheitelpunkt
- 12: Anbindungspunkt
- 13: Fahrzeugboden

- X: Fahrzeuglängsrichtung
- Y: quer zur Fahrzeuglängsrichtung bzw. rechtwinklig horizontal zur Fahrzeuglängsrichtung
- Z: senkrecht zur Fahrzeuglängsrichtung

## Patentansprüche

1. Vorderer Bereich einer Fahrgastzelle eines Kraftfahrzeugs, beinhaltend zwei sich genüberliegende A-Säulen (2), eine in Längsrichtung (X) des Kraftfahrzeugs begrenzende Spritzwand (3) und eine Quertraverse (1), wobei sich die Quertraverse (1) quer (Y) zur Längsrichtung (X) des Kraftfahrzeugs von der einen A-Säule (2) zur gegenüberliegenden A-Säule (2) erstreckt, **dadurch gekennzeichnet, dass** die Quertraverse (1) ausschliesslich an den A-Säulen (2) abgestützt bzw. gelagert ist, wobei die Quertraverse (1) als Druckgussbauteil ausgebildet ist.

2. Vorderer Bereich einer Fahrgastzelle nach Anspruch 1, **dadurch gekennzeichnet, dass** ein durchgehend offener Fussraum (4) quer (Y) zur Längsrichtung (X) des Kraftfahrzeugs von der einen A-Säule (2) bis zur gegenüberliegende A-Säule (2) und in Längsrichtung (X) des Fahrzeugs bis zur Spritzwand (3) gebildet ist.

3. Vorderer Bereich einer Fahrgastzelle nach einem der Ansprüche 1 oder 2, **dadurch gekennzeichnet, dass** die Quertraverse (1) an den beiden Enden Endabschnitte (6) aufweist und die Quertraverse (1) ausschliesslich an den beiden Endabschnitten (6) abgestützt ist.

4. Vorderer Bereich einer Fahrgastzelle nach einem der Ansprüche 1 bis 3, **dadurch gekennzeichnet, dass** an der Quertraverse (1) eine integrale Abstützung (9) angeordnet ist und sich zum Fahrzeugfontraum (8) hin in Bogenform erstreckt.

5. Vorderer Bereich einer Fahrgastzelle nach einem der Ansprüche 1 bis 4, **dadurch gekennzeichnet, dass** im Scheitelpunkt (11) der bogenförmigen Abstützung (9) ein Anbindungspunkt (12) angeordnet ist um die Abstützung (9) an der Karosserie bzw. an der Spritzwand abzustützen bzw. zu lagern.

6. Vorderer Bereich einer Fahrgastzelle nach einem der Ansprüche 1 bis 5, **dadurch gekennzeichnet, dass** zwischen der Quertraverse (1) und der Abstützung (9) eine Platte (10) angeordnet ist, wobei die Quertraverse (1), die Abstützung (9) und die Platte (10) integral bzw. einteilig ausgebildet sind.

7. Vorderer Bereich einer Fahrgastzelle nach einem der Ansprüche 1 bis 6, **dadurch gekennzeichnet, dass** die Quertraverse (1) zumindest abschnittsweise U-förmig ausgebildet ist.

8. Vorderer Bereich einer Fahrgastzelle nach einem der Ansprüche 1 bis 7, **dadurch gekennzeichnet, dass** die U-Form des Quertraverse (1) gegen unten in negativer Z-Richtung offen ist.

9. Vorderer Bereich einer Fahrgastzelle nach einem der Ansprüche 4 bis 8, **dadurch gekennzeichnet, dass** die Abstützung (9) U-förmig ausgebildet ist.
